# EUROPEAN PATENT SPECIFICATION

(11) **EP 4 526 566 B1**
(45) Date of publication and mention of the grant of the patent: **22.04.2026**
(21) Application number: 23728624.0
(22) Date of filing: 11.05.2023
(51) Int. Cl.: F03D 80/00

(54) **WIND TURBINE BLADE SLAYER DECOMMISSIONING**
AUSSERBETRIEBNAHME VON WINDTURBINENSCHAUFELN
MISE HORS SERVICE DE LA COUCHE DES PALES D'UNE ÉOLIENNE

(30) Priority: 16.05.2022 EP 22173522
(43) Date of publication of application: 26.03.2025
(73) Proprietor: Nederlandse Organisatie voor Toegepast-Natuurwetenschappelijk Onderzoek TNO, 2595 DA 's-Gravenhage (NL)
(72) Inventor: JAYAKUMAR, Shambu, 2595 DA 's-Gravenhage (NL)
(74) Representative: Nederlandsch Octrooibureau
(86) International application number: PCT/EP2023/062642
(87) International publication number: WO 2023/222517

(56) References cited:
- WO-A1-2019/079823
- WO-A1-2021/170190
- WO-A1-2021/191292

## Description

### Field of the Invention

The present invention relates to a blade decommissioning tool for decommissioning an installed wind turbine blade. The present invention further relates to a method for decommissioning an installed wind turbine blade.

### Background

Wind turbine blades wear out and have to be replaced. The used blades are over 120 feet long and are not easily disposed of due to the size of the used wind turbine blades. U.S. Patent Publication US 2020/0340445 A1 discloses a system and method for cutting and manipulating the used wind turbine blades for disposal and recycling. Documents WO2021/191292A1 and WO2021/170190A1 also disclose relevant background art.

However, known systems and methods require the prior demounting of the installed wind turbine blade. Hence, the disadvantage of the current methods is that it requires a great deal of work, time and costs.

### Object of the Invention

An object of the invention is to provide a tool for decommissioning an installed wind turbine blade, i.e. without demounting the wind turbine blade. Another object of the invention is to provide a method for decommissioning an installed wind turbine blade.

### Summary of the Invention

Aspects of the present disclosure are to address at least the above-mentioned problems and/or disadvantages and to provide at least the advantages described below.

This object and other objects which will become apparent from the following description are achieved at least in part by a tool and a method according to the independent claims. Embodiments are defined by the dependent claims.

This object is achieved by a blade decommissioning tool for decommissioning an installed wind turbine blade. The blade decommissioning tool comprises cutting means for cutting through the wind turbine blade in a transversal direction perpendicular to a longitudinal direction L of the wind turbine blade to form a proximal and distal part of the wind turbine blade; lowering means for lowering the distal part of the wind turbine blade relative to the proximal part; support means for supporting the cutting means and the lowering means; and clamping means for clamping the support means to wind turbine blade.

Advantageously, the used wind turbine blade may be cut and manipulated while remaining in its installed position at a height of for example 100 meter. Thereafter, the different parts of the long wind turbine blade may be lowered using the same tool. Hence, the decommissioning of used wind turbine blades may be substantially simplified.

In a first aspect, which can occur in combination with the other aspects and embodiments of the invention which are described herein, the present invention relates to the blade decommissioning tool as described above, wherein the clamping means comprise first clamping means for clamping the support means to the proximal part and second clamping means for clamping the support means to the distal part. The support means comprise two releasably connected support elements consisting of a first support element for supporting the first clamping means and a second support element for supporting the second clamping means. The lowering means are provided on the first support element, releasably connected to the second support element, and configured to lower the second support element relative to the first support element.

According to an embodiment, the present invention relates to the tool as described above, wherein the first and second support elements are releasable by remote control.

According to another embodiment, the present invention relates to the tool as described above, wherein the first support element extends over a first length L1 in the longitudinal direction L, wherein the second support element extends over a second length L2 in the longitudinal direction L, and wherein the first length L1 ranges between 40 and 60 % of the sum of the first and second length. According to a further embodiment, the present invention relates to the tool as described above, wherein the first length L1 ranges between 45 and 55 % of the sum of the first and second length. According to an even further embodiment, the present invention relates to the tool as described above, wherein the first length L1 approximately equals the second length L2.

In embodiments, the present invention relates to the tool as described above, wherein the cutting means are provided on the second support element. In some embodiments, the support means are formed by one or more elongated extending in the longitudinal direction L. In some embodiments, the clamping means comprises suction clamps. In some embodiments, the cutting means comprises a diamond wire saw. In some embodiments, the lowering means comprise one or more winches and one or more winch cables for connecting a respective winch to the distal part. Said lowering means may further comprising one or more sheaves for respectively guiding a respective winch cable.

In a further aspect, which can occur in combination with the other aspects and embodiments of the invention which are described herein, the present invention relates to a method for decommissioning an installed wind turbine blade, comprising the steps of: providing a blade decommissioning tool according to any one of the preceding claims on the installed wind turbine blade; cutting through the wind turbine blade using the cutting means of the blade decommissioning tool; and lowering the cut off distal part of the wind turbine blade using the lowering means of the blade decommissioning tool. According to an embodiment, the present invention relates to the method as described above, wherein a longitudinal direction L of the wind turbine blade extends in a mainly vertical direction or in a mainly horizontal direction. According to another embodiment, the present invention relates to the method as described above, wherein the blade decommissioning tool is provided at a height above sea level of at least 20 meter.

### Brief description of Drawings

The invention will be explained in more detail below with reference to drawings in which illustrative embodiments thereof are shown. They are intended exclusively for illustrative purposes and not to restrict the inventive concept, which is defined by the appended claims.
Figure 1 shows in a schematic view a blade decommissioning tool according to a first embodiment of the invention;
Figures 2A and 2B show in schematic view a blade decommissioning tool according to a second embodiment of the invention in different connection states;
Figures 3A and 3B show in schematic view respectively a first and second tool assembly of the blade decommissioning tool shown in Figures 2A and 2B;
Figure 4 show the blade decommissioning tool shown in Figure 2A provide on a used wind turbine blade.

### Detailed Description of Embodiments

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Moreover, the terms top, bottom, back, front and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the disclosure may be implemented rather than as limiting the scope of the disclosure.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present disclosure, the only enumerated components of the device are A and B, and further the claim should be interpreted as including equivalents of those components.

Different aspects of the present disclosure will be described more fully hereinafter with reference to the enclosed drawings. The embodiments disclosed herein can, however, be realized in many different forms and should not be construed as being limited to the aspects set forth herein.

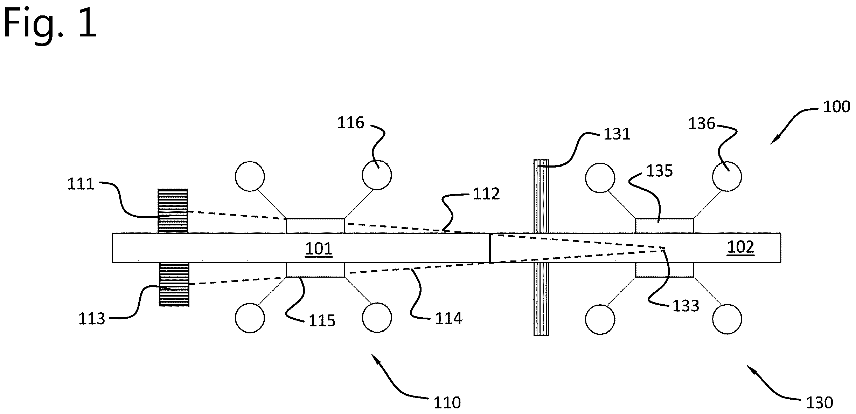

Figure 1 shows in a schematic view a blade decommissioning tool according to a first embodiment of the invention;

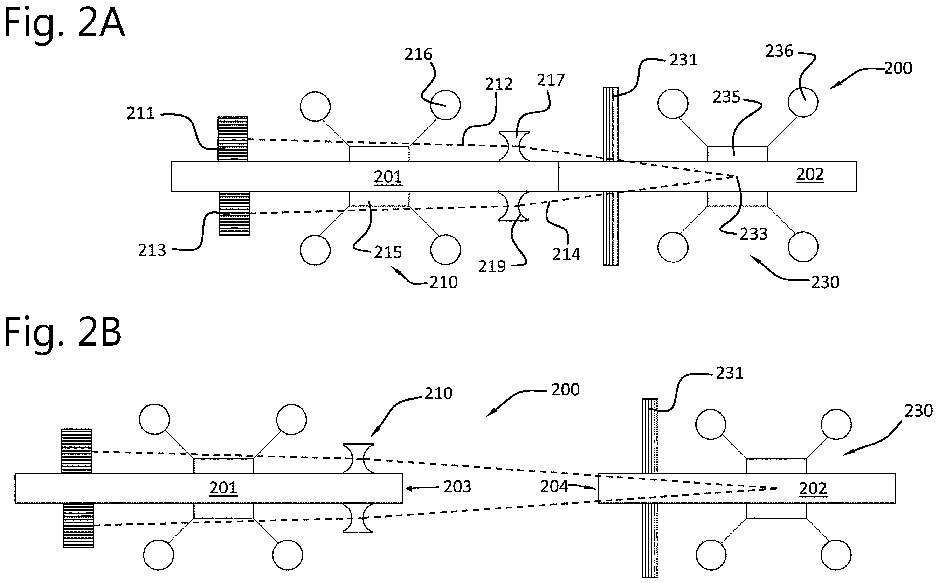

Figures 2a and 2b show in schematic view a blade decommissioning tool according to a second embodiment of the invention in different connection states;

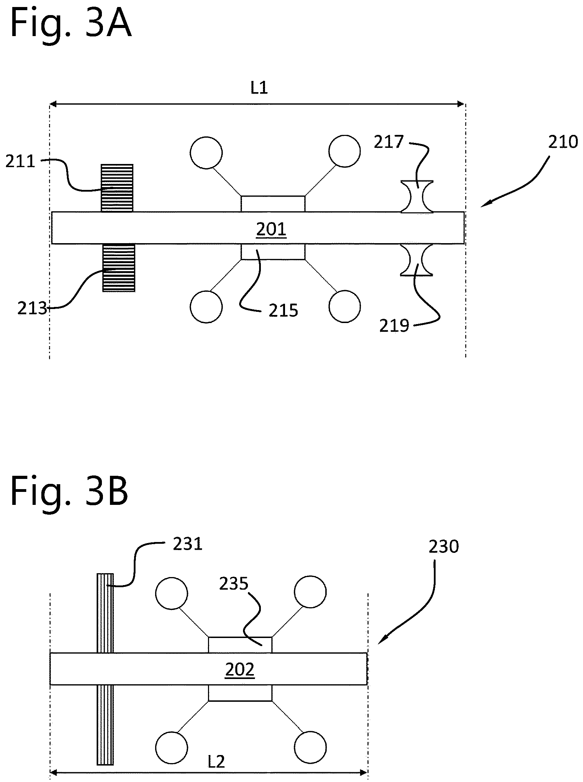

Figures 3a and 3b show in schematic view respectively a first and second tool assembly of the blade decommissioning tool shown in Figures 2a and 2b;

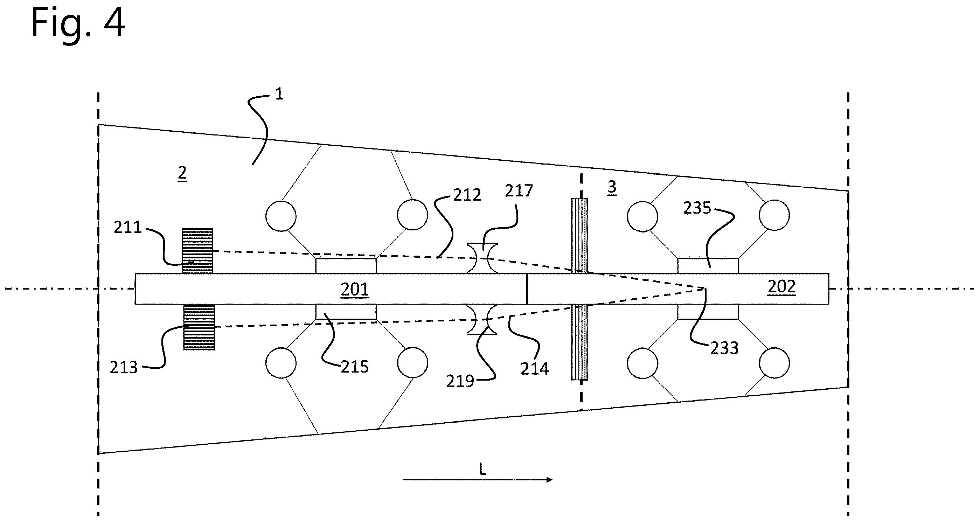

Figure 4 show the blade decommissioning tool shown in Figure 2a provide on a used wind turbine blade.

Figures 1-3 show blade decommissioning tools 100, 200 comprising two releasably connected tool assemblies 110, 130. The first tool assembly 110, 210 comprises a first beam part 101, 201 for supporting first clamping means 115; 215 and lowering means 111, 112, 113, 114; 211, 212, 213, 214, 217, 219. The second tool assembly 130, 230 comprises a second beam part 102, 202 for supporting second clamping means 135; 235 and cutting means 131; 231. The support means comprise complementary first and second connections means to releasably connect the first and second support elements, said first and second connections means being provided at respectively a distal end 203 of the first beam part 101, 201 and a proximal end 204 of the second beam part 102, 202. The first beam part 101, 201 extends over a first length L1 in a longitudinal direction L. The second beam part 102, 202 extends over a second length L2 in the longitudinal direction L. The first length L1 ranges between 20 and 80 % of the sum of the first and second length.

The first clamping means 115, 215 comprises suction clamps 116, 216 and is configured for clamping the first beam part 101, 201 to wind turbine blade 1. The second clamping means 135, 235 comprises suction clamps 136, 236 and are configured for clamping the second beam part 102, 202 to wind turbine blade 1.

The cutting means 131, 231 are configured for cutting through the wind turbine blade 1 in a transversal direction perpendicular to a longitudinal direction L of the wind turbine blade to form a proximal 2 and distal 3 part of the wind turbine blade.

The lowering means are configured for lowering the distal part 3 of the wind turbine blade relative to the proximal part 2. The lowering means comprises winches 111, 211, 113, 213, winch cables 112, 212, 114, 214 and optionally sheaves 217, 219 to guide the winch cables to one or more attachment points 133 on the second beam part 102.

Figures 4 shows the use of the blade decommissioning tools 200 while attached to a wind turbine blade 1. The first and second clamping means 215, 235, comprises suction clamps 136, 236, clamp the respective beam part 201; 202 to the wind turbine blade 1. The cutting means 231 cut through the wind turbine blade 1 in a transversal direction perpendicular to a longitudinal direction L of the wind turbine blade to form a proximal 2 and distal 3 part of the wind turbine blade. The lowering means are attached to an cable eye 133 on the second beam part 102 to lower the distal part 3 of the wind turbine blade relative to the proximal part 2.

Other alternatives and equivalent embodiments of the present invention are conceivable within the idea of the invention, as will be clear to the person skilled in the art. The scope of the invention is limited only by the appended claims.

### List of reference signs

- 1.: Wind turbine Blade
- 2.: Proximal Part of the Blade
- 3.: Distal Part of the Blade
- 100, 200.: Blade Decommissioning Tool
- 101, 201.: First Beam Part
- 102, 202.: Second Beam Part
- 203.: First Connection Side
- 204.: Second Connection Side
- 110, 210.: First Tool Assembly
- 111, 211, 113, 213.: Winch
- 112, 212, 114, 214.: Winch Cable
- 115,215.: Clamp
- 116, 216.: Suction Clamps
- 217, 219.: Sheave
- 130, 230.: Second Tool Assembly
- 131, 231.: Cutting Tool
- 133, 233.: Cable Eye
- 135, 235.: Clamp
- 136, 236.: Suction Clamps
- L.: Length direction
- L1.: Length of the First Beam Part
- L2.: Length of the Second Beam Part

## Claims

1. Blade decommissioning tool for decommissioning an installed wind turbine blade, comprising:
- cutting means (131; 231) for cutting through the wind turbine blade (1) in a transversal direction perpendicular to a longitudinal direction L of the wind turbine blade to form a proximal and distal part of the wind turbine blade;
- lowering means (111, 112, 113, 114; 211, 212, 213, 214, 217, 219) for lowering the distal part (3) of the wind turbine blade relative to the proximal part (2);
- support means (101, 102; 201, 202) for supporting the cutting means and the lowering means; and
- clamping means (115, 135; 215, 235) for clamping the support means to wind turbine blade (1).

2. Blade decommissioning tool according to claim 1,
wherein the clamping means comprise first clamping means (115; 215) for clamping the support means to the proximal part (2) and second clamping means (135; 235) for clamping the support means to the distal part (3),
wherein the support means comprise two releasably connected support elements consisting of a first support element (101, 201) for supporting the first clamping means (115; 215) and a second support element (102, 202) for supporting the second clamping means (135; 235), and
wherein the lowering means (111, 112, 113, 114; 211, 212, 213, 214, 217, 219) are provided on the first support element (101, 201), releasably connected to the second support element (102, 202), and configured to lower the second support element (202) relative to the first support element (201).

3. Blade decommissioning tool according to claim 2,
wherein the first and second support elements are releasable by remote control.

4. Blade decommissioning tool according to claim 2 or claim 3,
wherein the first support element extends over a first length L1 in the longitudinal direction L,
wherein the second support element extends over a second length L2 in the longitudinal direction L, and
wherein the first length L1 ranges between 40 and 60 % of the sum of the first and second length.

5. Blade decommissioning tool according to claim 4,
wherein the first length L1 ranges between 45 and 55 % of the sum of the first and second length.

6. Blade decommissioning tool according to claim 5,
wherein the first length L1 approximately equals the second length L2.

7. Blade decommissioning tool according to any one of the preceding claims 2-5,
wherein the cutting means (131; 231) are provided on the second support element (101, 201).

8. Blade decommissioning tool according to any one of the preceding claims,
wherein the support means are formed by one or more elongated beams (101, 102; 201, 202) extending in the longitudinal direction L.

9. Blade decommissioning tool according to any one of the preceding claims,
wherein the clamping means (115, 135; 215, 235) comprises suction clamps (116; 216).

10. Blade decommissioning tool according to any one of the preceding claims,
wherein the cutting means (115, 135; 215, 235) comprises a diamond wire saw.

11. Method for decommissioning an installed wind turbine blade, comprising the steps of:
- providing a blade decommissioning tool according to any one of the preceding claims on the installed wind turbine blade;
- cutting through the wind turbine blade (1) using the cutting means (115, 135; 215, 235) of the blade decommissioning tool; and
- lowering the cut off distal part (3) of the wind turbine blade (1) using the lowering means (111, 112, 113, 114; 211, 212, 213, 214, 217, 219) of the blade decommissioning tool.

12. Method according to claims 11, wherein a longitudinal direction L of the wind turbine blade extends in a mainly vertical direction or in a mainly horizontal direction.

13. Method according to claims 11, wherein the blade decommissioning tool is provided at a height above sea level of at least 20 meter.

## Patentansprüche

1. Schaufelstilllegungswerkzeug für das Stilllegen einer installierten Windturbinenschaufel, das folgendes umfasst:
Schneidmittel (131; 231) für das Schneiden durch die Windturbinenschaufel (1) in einer Querrichtung senkrecht zur Längsrichtung L der Windturbinenschaufeln, um ein proximales und ein distales Teil der Windturbinenschaufel zu bilden;
Absenkmittel (111, 112, 113, 114; 211, 212, 213, 214, 217, 219) für das Absenken des distalen Teils (3) der Windturbinenschaufeln relativ zu dem proximalen Teil (2);
Stützmittel (101, 102; 201, 202) für das Stützen der Schneidmittel und der Absenkmittel; und
Klemmmittel (115, 135; 215, 235) für das Klemmen der Stützmittel an die Windturbinenschaufel (1).

2. Schaufelstilllegungswerkzeug nach Anspruch 1,
wobei die Klemmmittel erste Klemmmittel (115; 215) für das Klemmen der Stützmittel an das proximale Teil (2) und zweite Klemmmittel (135; 235) für das Klemmen der Stützmittel an das distale Teil (3) aufweisen,
wobei die Stützmittel zwei lösbar verbundene Stützelemente, die aus einem ersten Stützelement (101, 201) für das Stützen der ersten Klemmmittel (115; 215) und einem zweiten Stützelement (102, 202) für das Stützen der zweiten Klemmmittel (135; 235) bestehen, aufweisen, und
wobei die Absenkmittel (111, 112, 113, 114; 211, 212, 213, 214, 217, 219) an dem ersten Stützelement (101, 201) vorgesehen sind, wobei diese lösbar mit dem zweiten Stützelement (102, 202) verbunden sind, und so konfiguriert sind, dass sie das zweite Stützelement (202) relativ zu dem ersten Stützelement (201) absenken.

3. Schaufelstilllegungswerkzeug nach Anspruch 2,
wobei die ersten und zweiten Stützelemente durch Fernsteuerung lösbar sind.

4. Schaufelstilllegungswerkzeug nach dem Anspruch 2 oder Anspruch 3,
wobei sich das erste Stützelement über eine Länge L1 in der Längsrichtung L erstreckt,
wobei sich das zweite Stützelement über eine zweite Länge L2 in der Längsrichtung L erstreckt, und
wobei die erste Länge L1 zwischen 40 und 60% der Summe der ersten und zweiten Länge liegt.

5. Schaufelstilllegungswerkzeug nach Anspruch 4,
wobei die erste Länge L1 zwischen 45 und 55% der Summe der ersten und zweiten Länge liegt.

6. Schaufelstilllegungswerkzeug nach Anspruch 5,
wobei die erste Länge L1 ungefähr der zweiten Länge L2 gleicht.

7. Schaufelstilllegungswerkzeug nach einem der vorhergehenden Ansprüche 2 bis 5,
wobei die Schneidmittel (131; 231) an dem zweiten Stützelement (101, 201) vorgesehen sind.

8. Schaufelstilllegungswerkzeug nach einem der vorhergehenden Ansprüche,
wobei die Stützmittel durch einen oder mehrere längliche Träger (101, 102; 201, 202), die sich in der Längsrichtung L erstrecken, gebildet sind.

9. Schaufelstilllegungswerkzeug nach einem der vorhergehenden Ansprüche,
wobei die Klemmmittel (115, 135; 215, 235) Saugklemmen (116; 216) aufweisen.

10. Schaufelstilllegungswerkzeug nach einem der vorhergehenden Ansprüche,
wobei die Schneidmittel (115, 135; 215, 235) eine Diamantdrahtsäge aufweisen.

11. Verfahren für das Stilllegen einer installierten Windturbinenschaufel, die die folgenden Schritte aufweist:
Vorsehen eines Schaufelstilllegungswerkzeug nach einem der vorhergehenden Ansprüche an der installierten Windturbinenschaufel;
Schneiden durch die Windturbinenschaufel (1), die Schneidmittel (115, 135; 215, 235) des Schaufelstilllegungswerkzeuges verwendend; und
Absenken des abgeschnittenen distalen Teils (3) der Windturbinenschaufel (1), die Absenkmittel (111, 112, 113, 114; 211, 212, 213, 214, 217, 219) des Schaufelstilllegungswerkzeuges verwendend.

12. Verfahren nach Anspruch 11, wobei eine Längsrichtung L der Windturbinenschaufel sich in eine überwiegend vertikale Richtung oder in eine überwiegend horizontale Richtung erstreckt.

13. Verfahren nach Anspruch 11, wobei das Schaufelstilllegungswerkzeug in einer Höhe von mindestens 20m über dem Meeresspiegel vorgesehen ist.

## Revendications

1. Outil de démantèlement de pale pour le démantèlement d'une pale d'éolienne installée, comprenant :
- des moyens de coupe (131 ; 231) pour couper à travers la pale d'éolienne (1) dans une direction transversale perpendiculaire à une direction longitudinale L de la pale d'éolienne afin de former une partie proximale et distale de la pale d'éolienne ;
- des moyens d'abaissement (111, 112, 113, 114 ; 211, 212, 213, 214, 217, 219) pour abaisser la partie distale (3) de la pale d'éolienne par rapport à la partie proximale (2) ;
- des moyens de support (101, 102 ; 201, 202) pour supporter les moyens de coupe et les moyens d'abaissement ; et
- des moyens de serrage (115, 135 ; 215, 235) pour serrer les moyens de support à la pale d'éolienne (1).

2. Outil de démantèlement de pale selon la revendication 1,
où les moyens de serrage comprennent des premiers moyens de serrage (115 ; 215) pour serrer les moyens de support à la partie proximale (2) et des deuxièmes moyens de serrage (135 ; 235) pour serrer les moyens de support à la partie distale (3),
où les moyens de support comprennent deux éléments de support reliés de manière amovible, consistant en un premier élément de support (101, 201) pour supporter les premiers moyens de serrage (115 ; 215) et en un deuxième élément de support (102, 202) pour supporter les deuxièmes moyens de serrage (135 ; 235), et
où les moyens d'abaissement (111, 112, 113, 114 ; 211, 212, 213, 214, 217, 219) sont prévus sur le premier élément de support (101, 201), reliés de manière amovible au deuxième élément de support (102, 202) et configurés pour abaisser le deuxième élément de support (202) par rapport au premier élément de support (201).

3. Outil de démantèlement de pale selon la revendication 2,
où le premier et deuxième élément de support peuvent être libérés par télécommande.

4. Outil de démantèlement de pale selon la revendication 2 ou la revendication 3,
où le premier élément de support s'étend sur une première longueur L1 dans la direction longitudinale L,
où le deuxième élément de support s'étend sur une deuxième longueur L2 dans la direction longitudinale L, et
où la première longueur L1 est comprise entre 40 et 60 % de la somme de la première et deuxième longueur.

5. Outil de démantèlement de pale selon la revendication 4,
où la première longueur L1 est comprise entre 45 et 55 % de la somme de la première et deuxième longueur.

6. Outil de démantèlement de pale selon la revendication 5,
où la première longueur L1 est approximativement égale à la deuxième longueur L2.

7. Outil de démantèlement de pale selon l'une quelconque des revendications précédentes 2 à 5,
où les moyens de coupe (131 ; 231) sont prévus sur le deuxième élément de support (101, 201).

8. Outil de démantèlement de pale selon l'une quelconque des revendications précédentes,
où les moyens de support sont formés par une ou plusieurs poutres allongées (101, 102 ; 201, 202) s'étendant dans la direction longitudinale L.

9. Outil de démantèlement de pale selon l'une quelconque des revendications précédentes,
où les moyens de serrage (115, 135 ; 215, 235) comprennent des pinces à succion (116 ; 216).

10. Outil de démantèlement de pale selon l'une quelconque des revendications précédentes,
où les moyens de coupe (115, 135 ; 215, 235) comprennent une scie à fil diamanté.

11. Méthode de démantèlement d'une pale d'éolienne installée, comprenant les étapes suivantes :
- fournir un outil de démantèlement de pale selon l'une quelconque des revendications précédentes sur la pale d'éolienne installée ;
- couper à travers la pale d'éolienne (1) à l'aide des moyens de coupe (115, 135 ; 215, 235) de l'outil de démantèlement de pale ; et
- abaisser la partie distale coupée (3) de la pale d'éolienne (1) à l'aide des moyens d'abaissement (111, 112, 113, 114 ; 211, 212, 213, 214, 217, 219) de l'outil de démantèlement de pale.

12. Méthode selon la revendication 11, où une direction longitudinale L de la pale d'éolienne s'étend dans une direction principalement verticale ou dans une direction principalement horizontale.

13. Méthode selon la revendication 11, où l'outil de démantèlement de pale est prévu à une hauteur au-dessus du niveau de la mer d'au moins 20 mètres.
